# FASCICULE DE BREVET EUROPEEN

(11) **EP 3 489 294 B1**
(45) Date de publication et mention de la délivrance du brevet: **28.10.2020**
(21) Numéro de dépôt: 18213684.6
(22) Date de dépôt: 08.03.2013
(51) Int. Cl.: C08J 11/12

(54) **PROCÉDÉ DE TRAITEMENT DE MATIÈRES CARBONÉES PAR VAPOTHERMOLYSE**
BEHANDLUNGSVERFAHREN VON KOHLENSTOFFEN DURCH DAMPF-THERMOLYSE
METHOD FOR TREATMENT OF CARBONATED MATERIALS BY VAPOTHERMOLYSIS

(43) Date de publication de la demande: 29.05.2019
(62) Demande divisionnaire de: 13716339.0
(73) Titulaire: Alpha Recyclage Franche Comte, 39100 Brevans (FR)
(72) Inventeur: PECH, Jean-Louis, 31200 Toulouse (FR)
(74) Mandataire: Plasseraud IP

(56) Documents cités:
- EP-A1- 2 236 588
- WO-A1-2008/075105
- FR-A1- 2 929 526
- RU-C2- 2 276 170
- US-A1- 2009 250 332

## Description

### Domaine Technique

La présente invention concerne le domaine du traitement des déchets carbonés et peut être utilisée par exemple dans l'industrie chimique pour la production de noir de carbone ou dans l'industrie du caoutchouc pour l'obtention de composants à base de mélanges de caoutchouc.

### Arrière-plan Technologique

Un problème qui se pose dans ce type d'industrie est lié au recyclage des eaux chargées, encore appelées eaux jaunes ou condensat provenant de la condensation des vapeurs émises au cours des procédés de traitement de déchets carbonés, particulièrement ceux utilisant la vapothermolyse.

### Art Antérieur

Des procédés de traitement de matières carbonées par vapothermolyse sont décrits dans l'art antérieur.

La demande de brevet WO 2008030137 décrit notamment un procédé de traitement de pneus usés comprenant leur pyrolyse dans un réacteur, la séparation de la phase solide et son broyage, la séparation des phases liquide et gazeuse par condensation suivie de la combustion de la phase gazeuse utilisée comme source de chaleur, le mélange des phases solide et liquide, les produits gazeux issus de la pyrolyse des pneus étant utilisés en mélange avec la vapeur d'eau dans un rapport de masse (1,0-5,0) : 1. Le procédé décrit dans cette demande de brevet n'envisage pas le traitement des produits secondaires toxiques générés au cours du traitement des pneus usés.

Le brevet RU 2276170 décrit une autre méthode comprenant la décomposition thermique de déchets carbonés dans un réacteur dans un milieu vapeur-gaz, la séparation des produits de décomposition en produits vapeur-gaz et en résidu carbonique solide, et le broyage des résidus carboniques. Préalablement au broyage des résidus carboniques, le métal est extrait par séparation magnétique.

L'huile extraite des produits vapeur-gaz par condensation subit une décomposition thermique en suie et en gaz à une température comprise entre 900 et 2000 °C (degré Celsius). Après extraction de l'huile, les produits vapeur-gaz sont brûlés ensemble avec les résidus carboniques et la suie est obtenue par filtration des produits de combustion. Les gaz issus de la décomposition thermique de l'huile sont brûlés et les produits de cette combustion sont utilisés en qualité d'agent caloporteur pour le chauffage extérieur du réacteur.

Des inconvénients liés à cette méthode proviennent d'une part de la consommation spécifiquement élevée d'énergie pour la production de 1 kg de suie, d'autre part de la quantité importante de résidus de carbone brûlés sans formation de suie au cours de la combustion commune avec les produits vapeur-gaz et enfin de l'introduction complexe des déchets dans le réacteur en raison de la nécessité d'extraire l'huile des produits vapeur-gaz au moyen d'un équipement spécial.

Par ailleurs, des rejets importants de produits nocifs de combustion dans l'environnement sont provoqués par une grande quantité de matières brûlées : les gaz de la décomposition thermique de l'huile, les produits vapeur-gaz ainsi qu'une partie des résidus de carbone broyés. La qualité du noir de carbone obtenu par cette méthode s'avère par ailleurs relativement faible suite à la combustion d'une partie des résidus de carbone broyés, la proportion de carbone dans la suie qui se forme se réduisant et la teneur en cendres augmentant.

Le brevet EP 2 236 588 décrit quant à lui un procédé pour l'utilisation d'eau de pyrolyse, mais ce procédé vise essentiellement à apporter une solution au problème de l'utilisation de la biomasse en tant que source d'énergie, notamment comme alternative aux sources d'énergies fossiles telles que le pétrole, le charbon et le gaz naturel. Le procédé décrit dans ce brevet consiste en un procédé de traitement des eaux chargées en matières organiques, cette eau provenant de la thermolyse de la biomasse et non du traitement des matières carbonées.

Le traitement des eaux chargées produites au cours des procédés de vapothermolyse des matières carbonées constitue un problème qui n'a pas été abordé sérieusement jusqu'à présent. Le traitement des matières carbonées, notamment des déchets de caoutchouc et le recyclage de cette source d'énergie, constitue une technologie relativement récente. Les aspects de la qualité du noir de carbone obtenu ainsi que la productivité des installations permettant ce traitement ont été considérés pour le moment en priorité, au détriment d'autres aspects liés à la rentabilité énergétique de ces installations et au respect de certains critères sanitaires, écologiques et plus globalement environnementaux.

### Résumé de l'Invention

La présente invention vise à pallier les inconvénients de l'art antérieur, notamment en réduisant la consommation d'énergie pour la production de noir de carbone et en diminuant la quantité de rejets nocifs dans l'environnement. Elle vise à permettre le traitement des eaux chargées produites au cours du procédé de vapothermolyse de matières carbonées et à diminuer les nuisances sanitaires et écologiques liées à l'apparition et la concentration de ces produits industriels secondaires.

Contrairement aux procédés connus qui prévoient classiquement le réacheminement des eaux jaunes, après condensation et séparation des produits de combustion, vers un générateur de vapeur, l'eau chargée issue du condensat est ainsi valorisée pour être réutilisée au sein même de l'usine de traitement des déchets carbonés. Le traitement thermique de ces eaux jaunes permet en outre d'éviter le relargage des produits toxiques présents dans ces eaux dans l'environnement ce qui représente un bénéfice écologique et permet également de résoudre le problème des mauvaises odeurs liées à ces eaux chargées.

Dans un mode particulier de réalisation, les fumées de combustion permettant de chauffer le réacteur proviennent de la combustion d'un combustible et/ou de la combustion des gaz non condensés obtenus à l'issue de la condensation des produits vapeur-gaz formés dans le réacteur par vapothermolyse. Ainsi, la source d'énergie calorifique permettant de chauffer le réacteur selon l'invention peut provenir de la combustion de l'eau issue du condensat, combinée à la combustion d'un combustible éventuellement associée ou substituée par la combustion des gaz non condensés obtenus à l'issue de la condensation des produits vapeur-gaz formés dans le réacteur par vapothermolyse. Ceci permet d'améliorer le rendement énergétique du procédé en réduisant les apports extérieurs en combustible, l'un des objectifs du procédé étant de se rapprocher au plus près de l'autonomie énergétique et de l'exploitation la plus complète de toutes les ressources fournies par les matières carbonées traitées.

Dans un mode particulier de réalisation, les gaz non condensés obtenus à l'issue de la condensation des produits vapeur-gaz formés dans le réacteur par vapothermolyse sont traités thermiquement, c'est à dire brûlés, pour chauffer le réacteur indépendamment de la combustion de l'eau issue du condensat. De cette manière, il n'y a pas d'interférence entre la combustion de l'eau issue du condensat et la combustion des gaz non condensés issus de la vapothermolyse des déchets de matières carbonées. Ceci permet un meilleur contrôle de ces combustions et facilite la régulation de l'énergie calorifique apportée au réacteur.

Dans un mode particulier de réalisation, l'huile provenant du condensat est évaporée en une première fraction avec une température d'ébullition inférieure ou égale à 200 °C, dite fraction légère, et en une deuxième fraction avec une température d'ébullition supérieure à 200 °C, dite fraction lourde.

De préférence, la température d'ébullition de la fraction légère est comprise entre 60°C et 200 °C, et la température d'ébullition de la fraction lourde est comprise entre 201 °C et 600 °C, ce qui permet d'optimiser la qualité des fractions légère et lourde obtenues.

La séparation de l'huile en une première fraction avec une température d'ébullition inférieure ou égale à 200 °C permet d'obtenir un liquide présentant une viscosité faible, ce qui permet d'assurer l'imprégnation par ce liquide des particules de la fraction carbonique broyée par remplissage des pores desdites particules. L'imprégnation des particules des résidus carboniques par l'huile directement séparée des produits vapeur-gaz, n'est pas possible, cette huile ayant une viscosité élevée et ne pouvant pratiquement pas pénétrer dans les pores des particules.

La séparation de l'huile en une deuxième fraction avec une température d'ébullition supérieure à 200 °C permet d'obtenir des matières premières de qualité pour la production de noir de carbone, cette fraction présentant un rapport d'hydrogène au carbone optimal pour assurer un rendement de production de noir de carbone de haute qualité au cours de la décomposition thermique de cette fraction.

Dans un mode de réalisation de l'invention, une partie des fumées de combustion évacuées est condensée en eau qui est utilisée pour générer de la vapeur elle-même utilisée pour chauffer les déchets de matière carbonée broyés à l'intérieur du réacteur. Cela permet, là encore, de valoriser au maximum les produits secondaires générés par le traitement des matières carbonées. Cela permet ainsi le fonctionnement de l'installation mettant en œuvre le procédé selon la présente invention en réduisant le plus possible les besoins extérieurs.

Un autre aspect de l'invention concerne un dispositif pour mettre en œuvre le procédé de traitement de matières carbonées selon le premier aspect de l'invention décrit ci-dessus. Le dispositif selon la présente invention est en effet particulièrement adapté pour permettre la production d'un noir de carbone de qualité en limitant les rejets toxiques dans l'environnement par la réutilisation des eaux chargées dans le cycle de production de l'usine.

Plus précisément, il est proposé un dispositif de traitement de matières carbonées par vapothermolyse comprenant des moyens d'introduction de déchets de matière carbonée broyés tels qu'une trémie dans un réacteur alimenté par un combustible provenant d'une cuve, doté d'un brûleur et d'une enveloppe recevant les produits de combustion évacués au moyen d'un aspirateur de fumées vers un scrubber, un générateur de vapeur alimentant en vapeur d'eau un surchauffeur de vapeur de manière à porter la vapeur d'eau à l'intérieur du réacteur à une température comprise entre 200 et 700 °C, une sortie du réacteur destinée à évacuer les produits vapeur-gaz formés dans le réacteur dans un condenseur relié à un séparateur, une cuve de stockage recevant les eaux chargées du condensat et des moyens d'acheminement adaptés pour conduire lesdites eaux chargées de ladite cuve de stockage vers le brûleur.

De manière avantageuse, le dispositif peut comprendre en outre un évaporateur recevant l'huile du séparateur et adaptée pour permettre l'évaporation de celle-ci en une première fraction avec une température d'ébullition inférieure ou égale à 200 °C, dite fraction légère, et en une deuxième fraction avec une température d'ébullition supérieure à 200 °C, dite fraction lourde. De préférence, cet évaporateur permet l'évaporation de la fraction légère avec une température d'ébullition comprise entre 60 °C et 200 °C, et de la fraction lourde avec une température comprise entre 201 °C et 600 °C.

Dans un mode particulier de réalisation, le condenseur peut être équipé de moyens d'acheminement adaptés pour conduire les gaz non condensés obtenus à l'issue de la condensation des produits vapeur-gaz formés dans le réacteur par vapothermolyse vers le brûleur.

De manière alternative, le condenseur peut être équipé de moyens d'acheminement adaptés pour conduire les gaz non condensés obtenus à l'issue de la condensation des produits vapeur-gaz formés dans le réacteur par vapothermolyse vers un brûleur indépendant du brûleur permettant le traitement thermique des eaux chargées, ce qui permet de mieux contrôler et réguler la combustion de l'eau issue du condensat et celle des gaz non condensés issus de la vapothermolyse des déchets de matières carbonées, utilisées pour chauffer le réacteur.

De manière avantageuse, le brûleur indépendant permettant de traiter thermiquement les produits vapeur-gaz formés dans le réacteur par vapothermolyse pour chauffer le réacteur est alimenté en combustible provenant de la cuve.

Dans un mode de réalisation, le scrubber peut être relié à des moyens de condensation adaptés pour récupérer l'eau issue des produits de combustion, le dispositif étant en outre adapté pour réutiliser l'eau récupérée par lesdits moyens de condensation pour générer de la vapeur au niveau du réacteur.

### Brève Description des Dessins

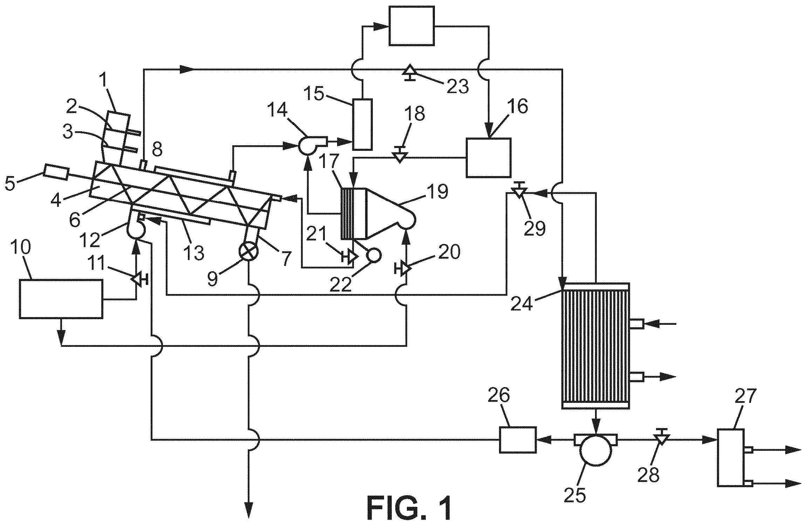

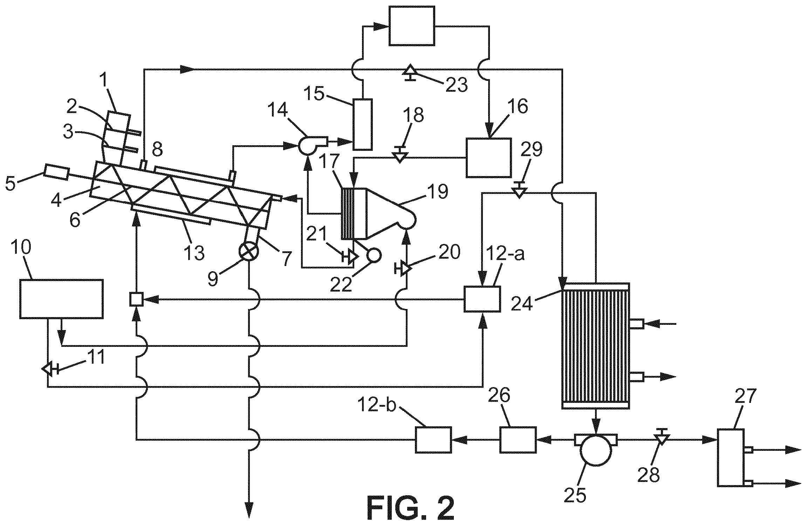

D'autres caractéristiques et avantages de l'invention apparaîtront encore à la lecture de la description qui va suivre. Celle-ci est purement illustrative et doit être lue en regard des figures 1 et 2 présentant le plan de l'installation permettant de mettre en oeuvre le procédé de traitement de matières carbonées par vapothermolyse selon des modes de réalisation de l'invention.

### Description détaillée de modes de réalisation

Au cours d'un procédé classique de vapothermolyse de matières carbonées telles que des déchets de caoutchouc, il se forme une eau chargée, encore appelée eau jaune ou condensat correspondant essentiellement à la vapeur d'eau condensée et séparée de la fraction liquide des hydrocarbures qui contient le mélange des hydrocarbures. L'analyse de ce condensat révèle qu'il contient entre autres :
- du caprolactame (concentration de 1,16 g/l), C₆H₁₁NO: substance principale de la destruction thermique, lactame de l'acide e-épsilonaminocaproïque ou l'amide cyclique de l'acide e-épsilonaminocaproïque, se présentant sous la forme de cristaux de couleur blanche. Ce composé possède une capacité de polymérisation importante pendant le chauffage (250-260 °C) en présence d'une faible quantité d'eau, d'alcool, d'amines, d'acides organiques et d'autres combinaisons pour former un polymère de valeur, le poly-e-caproamide (résine polyamide) et des matières premières pour la formation de caprone.
- de l'acide benzoïque (concentration de 0,21 g/l), C₆H₅COOH : acide aromatique élémentaire se présentant sous la forme de cristaux brillants incolores.
- du cyclopentanone (adipenketon, ketopentaméthylène) (concentration de 0,13 g/l), C₅H₈O : liquide incolore présentant une odeur âcre. Forme des dérivés de cétones.
- de l'alcool furfurylique (2-furylcarbinol) (concentration de 0,11 g/l) C₅H₆O₂ : liquide soluble dans l'eau.
- du catéchol (1,2-dioxybenzenes) (concentration de 0,09 g/l) C₆H₄(OH)₂ : facilement oxydé à l'o-benzoquinone.
- des phénols (oxybenzol, acide carbolique) (concentration de 0,08 g/l) C₆H₅OH : cristaux incolores devenant roses à la lumière. Obtenus par séparation de goudron de houille, par hydrolyse de chlorobenzène des vapeurs d'eau en présence d'un catalyseur, etc...
- du o-diméthoxybenzène (éther diméthylique résorcinol) (concentration de 0,07 g/l) C₆H₄(OCH₃)₂.
- du p-méthoxyphénol (concentration de 0,05 g/l) CH₃OC₆H₄OH.
- du benzothiazole (concentration de 0,03 g/l) C₇H₅NS : liquide jaune présentant une odeur désagréable. Composé distillé à la vapeur d'eau.

L'ensemble de ces composés présents dans les eaux chargées issues de la vapothermolyse de matières carbonées revêt un caractère de toxicité important non seulement pour l'environnement, mais aussi pour l'homme. L'émission des eaux jaunes dans l'environnement entraîne une pollution importante de l'air, des sols et des nappes phréatiques. Elle s'accompagne en outre d'une forte odeur désagréable et incommodante pour le personnel et les populations vivant à proximité des usines de traitement de matière carbonée. La multiplication, ces dernières années, des projets industriels visant à apporter une solution au problème du recyclage des déchets de caoutchouc a engendré l'apparition et la concentration de ces produits secondaires nocifs pour lesquels aucun traitement écologique n'a été envisagé jusqu'à maintenant.

De plus, la formation et l'accumulation de ce condensat au cours du procédé de traitement de matière carbonée s'accompagnent de dysfonctionnements au sein de l'installation industrielle de vapothermolyse. La plupart des usines de traitement de matière carbonée existantes éliminent ces eaux jaunes par évaporation. Or, du fait des propriétés physico-chimiques de certains composés présents dans les eaux jaunes, il se forme une mousse diminuant considérablement l'efficacité de l'évaporation et donc l'élimination même des eaux jaunes. Il est également possible que l'évaporation des eaux jaunes produise une certaine quantité de boues de nature à encrasser certains conduits et à encombrer certaines évacuations au cœur de l'usine et à proximité de celle-ci.

Le fonctionnement des réacteurs à vis utilisés dans ce type d'usine entraîne inévitablement l'affinage du noir de carbone lors de la rotation de la vis et l'entraînement de la poussière dans le système de condensation. Par conséquent, une partie de cette poussière se retrouve dans les eaux jaunes. Lors de l'évaporation, cette poussière (constituée en partie par les petites particules de carbone) reste dans le résidu, entraînant la formation de boues qui salissent l'évaporateur.

La présente invention permet de résoudre ces inconvénients grâce à un procédé de traitement de matières carbonées par vapothermolyse permettant l'obtention d'un noir de carbone de qualité et apportant une solution écologique au problème des eaux jaunes.

En référence au schéma de mode de réalisation du dispositif montré à la figure 1, on introduit les déchets de matière carbonée broyés, se présentant sous la forme de caoutchouc broyés dans cet exemple, dans la trémie 1 équipée des fermetures fermées 2 et 3. Après cela, on ouvre la fermeture 2 de sorte que les déchets de la trémie 1 tombent en bas et restent sur la fermeture 3. On ouvre ensuite la fermeture 3 et la portion des déchets tombe dans le réacteur cylindrique 4. Ensuite on ferme la fermeture 3. Simultanément avec le moteur 5, on met en rotation la vis 6 installée dans le réacteur cylindrique 4. Les déchets broyés solides sont pris par la vis et entraînés dans le réacteur cylindrique 4 vers la sortie 7 équipée de la fermeture rotative 9 avant d'être soumis aux étapes ultérieures de traitement pour l'obtention du noir de carbone (étapes notamment décrites dans la demande internationale de brevet WO 2012/140375). Le temps de déplacement des déchets dans le réacteur cylindrique est régulé par la vitesse de rotation de la vis 6. Simultanément à l'initiation du procédé et au déplacement des déchets, on introduit le combustible provenant de la cuve 10 par le robinet régulateur 11 dans le brûleur 12 où il est brûlé. Les produits de cette combustion, se présentant sous la forme de fumées de combustion, sont dirigés vers l'enveloppe 13 du réacteur 4. En passant dans l'enveloppe 13, les fumées de combustion du combustible chauffent le réacteur, se refroidissent à leur tour et, à l'aide de l'aspirateur de fumées 14, sont évacuées vers le scrubber 15.

Le générateur de vapeur 16 alimente en vapeur d'eau le surchauffeur de vapeur 17, par l'intermédiaire du robinet 18, de manière à la porter à une température comprise entre 200 et 700 °C, de préférence 400 à 600 °C. Pour cela, le combustible provenant de la cuve 10 alimente le brûleur 19 via le robinet 20 pour être brûlé. Les déchets de matière carbonée sont chauffés à l'intérieur du réacteur 4 au contact de la vapeur d'eau portée à la température de 200 - 700 °C. Les fumées de combustion de l'enveloppe 13 se refroidissent jusqu'à une température comprise entre 200 et 450 °C, avant d'être évacuées à l'aide de l'aspirateur à fumées 14 dans le scrubber 15.

La vapeur d'eau surchauffée provenant du surchauffeur d'eau 17 est amenée par le robinet 21 dans le réacteur cylindrique 4. La température de la vapeur est contrôlée selon les indications du capteur de température 22 afin de ne pas dépasser une température de surchauffe. Les déchets de caoutchouc se déplacent dans le réacteur 4 et sont chauffés au contact des parois chaudes du réacteur et par voie d'échange calorifique convectif avec la vapeur d'eau fournie dans le réacteur. Il en résulte une vapothermolyse des déchets avec dégagement des produits gazeux et des résidus solides de carbone.

Les produits vapeur-gaz formés, issus de la vapothermolyse des déchets de matière carbonée broyés, sont évacués du réacteur 4 dans le condenseur 24 par la sortie 8 via le robinet 23. Dans le condenseur 24 ils sont condensés par échange thermique avec l'eau de refroidissement pour former un condensat contenant de l'eau et de l'huile. Le condensat est ensuite acheminé vers le séparateur 25 où l'eau est séparée de l'huile. L'eau obtenue à l'issue de cette séparation présente une couleur jaune et une forte odeur désagréable. Elle contient, outre des hydrocarbures résiduels, des composés toxiques parmi lesquels on relève, entre autres, du caprolactame, de l'acide benzoïque, du cyclopentanone, de l'alcool furfurylique, du catéchol, du phénol, du o-diméthoxybenzène, du p-méthoxyphénol, du benzothiazole ainsi qu'il a été détaillé plus haut. Cette eau jaune est réacheminée vers la cuve de stockage 26 pour être par la suite traitée thermiquement dans le brûleur 12.

L'huile provenant du séparateur 25 est transférée vers l'évaporateur 27 via le robinet 28. Dans l'évaporateur, elle est séparée en une première fraction avec une température d'ébullition inférieure ou égale à 200 °C (fraction légère) et en une deuxième fraction avec une température d'ébullition supérieure à 200 °C (fraction lourde).

La fraction gazeuse non condensée provenant du condenseur 24 via le robinet 29 peut être brûlée dans le brûleur 12.

Dans un autre mode de réalisation représenté sur la figure 2, les produits vapeur-gaz non condensés obtenus à l'issue de la condensation des produits vapeur-gaz formés dans le réacteur 4 par vapothermolyse sont traités thermiquement au niveau du brûleur 12-a pour chauffer directement le réacteur 4, ceci indépendamment de la combustion des eaux chargées issues du condensat qui sont elles aussi brûlées mais par un autre brûleur 12-b, pour chauffer le réacteur 4. Dans ce mode de réalisation, le brûleur 12-a est alimenté en combustible provenant de la cuve 10 par l'intermédiaire du robinet 11. La cuve 10 est également reliée au brûleur 19 du surchauffeur de vapeur 17.

Grâce au procédé de traitement de matières carbonées par vapothermolyse qui a été décrit ci-dessus, les produits secondaires toxiques représentés par les eaux chargées issues de la condensation des produits de vapothermolyse des déchets de caoutchouc sont traités et réutilisés dans le circuit de production du noir de carbone. Le procédé proposé permet ainsi de répondre au problème de la pollution liée à l'apparition et à la concentration des eaux jaunes au sein des usines de traitement de matière carbonée. Il permet de diminuer voire de supprimer totalement les risques d'encrassement et d'encombrement des conduits et évacuations de ces usines. Enfin, il représente une alternative au traitement de ces eaux chargées particulièrement intéressante dans la mesure où il permet non seulement de supprimer les nuisances qui y étaient associées mais en plus de valoriser ces produits secondaires en prévoyant leur utilisation comme source d'énergie calorifique pour la thermolyse des déchets carbonés.

L'invention est illustrée par l'exemple suivant :

### Dispositif pour la mise en oeuvre du procédé de traitement de matières carbonées par vapothermolyse selon des modes de réalisation de l'invention

Dans l'exemple qui suit, l'unité permettant de mettre en œuvre le procédé selon l'invention est composée de 2 lignes de vapo-thermolyse avec une capacité minimale de traitement en pneus broyés de 1t/h chacune, qui sont réunies par plusieurs équipements en commun : une ligne commune de traitement du noir de carbone et un système commun de traitement des rejets gazeux et aqueux.

### ELEMENTS DE L'EQUIPEMENT

L'unité comprend essentiellement les blocs d'équipements suivants :
A-Equipement de la ligne de vapo-thermolvse :
B-Equipement de la ligne de traitement du carbone : et,
C-Equipement pour le traitement des rejets atmosphériques et aqueux.

### A-Equipement de la ligne de vapo-thermolvse :

### A-1. Système de convoyeurs pour l'alimentation de deux réacteurs :

La densité apparente du broyat de pneumatique est caractérisée par la valeur peu importante de 400-500kg/m³ (dimension des morceaux 50mm par 50mm), d'où il résulte que le convoyeur de chaque réacteur doit livrer jusqu'à 2,5 m³/h des matières premières. On peut utiliser une trémie de capacité minimum de 20 heures de fonctionnement soit 50 m³.

### A-2. Valves de trémie de chargement-déchargement du réacteur :

L'alimentation des réacteurs peut être contrôlée par des doubles valves de trémie (« double dump gate, double flapgate air-lock valve », en anglais) avec une section de passage D qui peut être égale à 10" (250 mm), par exemple, une capacité de transmission jusqu'à 4 m³/h, par exemple, est adaptée.

L'ouverture de la seconde valve se fait lorsqu'un certain niveau de poids/volume est atteint dans l'espace entre les deux valves. La double valve de déchargement est contrôlée en fréquence par rapport aux valves de chargement afin de vérifier qu'il n'y a pas d'accumulation de matière dans le réacteur. Ainsi la quantité de produits solides formée est surveillée (soit environ 45% du broyat entrant, dans un exemple).

De plus la vanne de chargement par le haut de la trémie est équipée d'un système d'injection d'azote, afin d'empêcher la pénétration d'air dans le réacteur à vis.

### A-3. Transporteur à vis pour le déchargement du carbone :

Chacune des lignes de production peut être équipée d'un convoyeur à vis permettant d'abaisser la température du noir de carbone en sortie du réacteur. Le noir de carbone produit rejoint ensuite la partie de traitement du solide commune à l'ensemble de l'installation.

### A-4. Réacteur à vis de la pyrolyse à vapeur des pneus :

Le réacteur de thermolyse comprend trois chambres à vis cylindriques superposées (ayant par exemple un diamètre Ø = 600 mm, une épaisseur de paroi t = 6 mm, une longueur de la chambre L1 = 6 m, et une longueur totale avec les moteurs et les roulements L3 = 9,5 m) dans lesquelles la thermolyse des pneus a lieu. Le transport du broyat dans les chambres est réalisé par trois vis sans fin tournant à une vitesse réglée par convertisseur alternatif (électronique) de la capacité du moteur électrique de la vis sans fin.

L'alimentation en broyat se fait par l'entrée de la chambre supérieure et la chauffe commence. Ensuite les pneus se dirigent à l'aide de la vis sans fin (acier inox SS 321) dans toute la longueur de la chambre, et après cela tombent dans la deuxième chambre de thermolyse placée sous la première et la température augmente, et ensuite passent dans la troisième chambre où la réaction est complète (acier inox SS 310).

Les vis sans fin tournent à l'aide d'une transmission à chaîne d'un seul moteur-réducteur de type planétaire connu de l'homme du métier avec une capacité supérieure à 5kW et un variateur mécanique ou alternatif (électronique) de puissance-vitesse de rotation.

Les vis sans fin se chauffent à l'aide du transfert de chaleur par rayonnement dans l'enveloppe du réacteur (13), où circulent les gaz de combustion chauds (1000-1050 °C) résultant de la combustion du gaz de thermolyse.

Dans l'espace de chauffe du foyer en dehors des vis, il y a un serpentin de surchauffe de la vapeur (17) jusqu'à la température 500-600 °C sous une pression maximum de 5 bars, celui-ci utilise également la chaleur des fumées. Cette vapeur surchauffée est ensuite injectée dans la vis d'entrée du broyat de pneumatiques.

Les fractions gazeuses de décomposition du pneumatique mélangées à la vapeur d'eau sont extraites en partie moyenne du réacteur et dirigées vers le condenseur (24) des produits gazeux de thermolyse.

### A-5. Chambre de combustion du gaz de thermolyse :

La chambre de combustion permet de fournir l'énergie (à partir de la combustion des produits obtenus lors de thermolyse), nécessaire pour la réaction de la thermolyse. La chambre de combustion est équipée d'un brûleur automatique standardisé à gaz (pour la combustion du gaz de thermolyse) et à combustible liquide de type *Weishaupt WM-GL 10.*

Un ventilateur amène de l'air à la réaction de combustion ayant lieu dans les brûleurs avec une consommation d'air estimée à 2 400 kg/h par chambre de combustion. Le gaz de thermolyse restant après la condensation du fioul de thermolyse dans le condenseur est aussi injecté dans la chambre de combustion.

### A-6. Dispositif de traitement des eaux jaunes :

Les eaux jaunes produites au condenseur sont directement injectées dans la flamme d'un brûleur à cyclone à l'aide d'un ensemble de buses de pulvérisation.

La température et le temps de séjour sont déterminés de manière à assurer l'oxydation complète des composés organiques et l'élimination TOTALE des odeurs. De plus la poussière de carbone contenue dans les eaux jaunes ne forme pas de cendres à l'intérieur du brûleur car elle est oxydée. Le nettoyage de la chambre de combustion est réalisé environ 1 fois par an.

Le fait d'ajouter de la vapeur d'eau (issue du traitement des eaux jaunes) aux fumées de combustion de sorte qu'elle joue le rôle d'agent caloporteur possède certains avantages par rapport à l'utilisation des fumées comme un agent caloporteur :
1. La capacité calorifique massique du caloporteur vapeur-gaz est de 20 à 25 % supérieure à la capacité thermique spécifique des produits de combustion seuls (gaz de fumées), ce qui permet de diminuer la consommation d'air à ajouter au caloporteur de 20 à 25 %.
2. L'addition de la vapeur d'eau dans les fumées assure la diminution non seulement de l'oxygène, mais des autres produits de combustion nocifs (oxyde du carbone, oxydes d'azote, etc) dans les fumées grâce à leur dilution par la vapeur d'eau, donc cet agent caloporteur est écologiquement plus pur, que les produits de combustion du fioul liquide utilisés pour le chauffage du réacteur à vis.
3. Cet agent caloporteur vapeur-gaz possède un coefficient d'échange thermique plus avantageux que celui des gaz de combustion seuls ce qui permet d'augmenter le rendement d'échange au niveau des réacteurs à vis et du générateur de vapeur.

### A-7. Générateur de vapeur :

Les générateurs de vapeur permettent de fabriquer la vapeur d'eau nécessaire pour l'optimisation de la réaction de thermolyse des pneumatiques dans le réacteur. La vapeur est fabriquée à partir de l'eau provenant du scrubber (15). Le générateur de vapeur (16) utilise uniquement la chaleur des gaz de fumées après la chauffe du réacteur de thermolyse (4).

### A-8. Condenseur de combustible :

Les fractions gazeuses issues du réacteur de thermolyse (4) sont condensées en fioul. Les fractions gazeuses passent par les sections du condenseur refroidis à l'eau ce qui entraîne la condensation du fioul. Le fioul condensé s'écoule dans la partie inférieure du condenseur d'où il est acheminé vers les équipements de distillation du fioul. La température de condensation permettra de récupérer le fioul ainsi que de condenser la vapeur des eaux jaunes.

### A-9. Equipement pour la collecte et la séparation des condensats :

La collecte du fioul de thermolyse des condenseurs est effectuée dans deux séparateurs statiques (25) de 10 m³ chacun. Le temps de séjour est suffisamment long pour que la décantation ait lieu avec la séparation en 3 phases : bitume lourd, eau et fioul.

Un détecteur de niveau (type Liquiphant) permet de contrôler le niveau des différents produits et d'éviter que du fioul ne soit injecté dans le brûleur au lieu des eaux jaunes. Une cuve tampon pour les eaux jaunes avant injection dans le brûleur sera prévue.

### A-10. Rectification du fioul :

Cet ensemble est constitué de l'évaporateur de la fraction légère et du condenseur de la fraction légère. Il s'agit de séparer précisément les deux fractions du fioul (lourde et légère) afin de contrôler le plus précisément possible les caractéristiques de la fraction lourde et notamment son point éclair.

Le fioul condensé au niveau du condenseur est dirigé vers un évaporateur qui utilise un chauffage électrique pour vaporiser la fraction légère. La fraction lourde reste liquide et est pompée directement vers les cuves de stockage du fioul lourd. La fraction légère à l'état de gaz sort en tête puis est dirigée vers le condenseur de la fraction légère afin de retourner à l'état liquide pour être ensuite pompée vers les cuves de stockage du fioul léger.

### B-Equipement de la ligne de traitement du carbone :

### B-11. Equipement de la ligne de traitement du carbone :

Les résidus solides des produits de la thermolyse sont amenés sur le vibrotamis à l'aide d'un transporteur à vis.

Un convoyeur à vis achemine ensuite le noir de carbone dans le silo de stockage tampon du noir de carbone. Les matières traitées après broyage sont dirigées vers la séparation magnétique, où a lieu le procédé de séparation du carbone et des cordes métalliques, le métal s'accumule dans la trémie puis est acheminé vers la benne de stockage avant élimination.

### C-Equipement pour le traitement des rejets atmosphériques et aqueux

### C-12. Scrubber pour le lavage des rejets gazeux et la condensation de la vapeur :

Equipement standardisé et commun aux deux lignes de production. Le scrubber (15) permet de traiter les fumées issues de la combustion du gaz de thermolyse et du fioul dans le brûleur, et limiter ainsi les rejets de polluants (SOx et NOx principalement). Ainsi un lavage basique est effectué sur les fumées de combustion. Une sonde de pH placée dans l'eau de lavage permet de réguler la quantité de NaOH injectée. La capacité de lavage des gaz du scrubber est limitée à 20 000 Nm³/h avec une température de rejet des gaz dans l'environnement proche de 50 °C.

Les gaz sont ensuite acheminés vers une cheminée d'évacuation d'une hauteur minimum de 10m. Cette cheminée comprend une plateforme de mesure conforme à la norme NF X 44 052 qui est placée de manière à permettre des points de mesure pertinents (rectitude de la conduite amont et aval, régime d'écoulement,..). Une purge est placée sur le scrubber pour réaliser la déconcentration de l'eau de circulation du cycle de lavage des gaz afin de maintenir des concentrations suffisamment faibles pour assurer un bon transfert de matière. Le garnissage est prévu pour résister aux hautes températures des gaz.

### CARACTERISTIQUES DES PRODUITS

### 1. Fioul de thermolyse :

L'installation telle que décrite ci-dessus produit le fioul de thermolyse en quantité de 400-450 kg de fioul par tonne de broyat de pneumatiques. Le fioul de thermolyse issu de l'installation présente les caractéristiques suivantes :

**Tableau 1 - Caractéristiques du fioul de thermolyse**

| **Paramètres** | **Unité** | **Valeurs** |
|---|---|---|
| DENSITE | kg/ m³ | 940 à 1050 |
| VISCOSITÉ À 20 °C | cSt | ≥ 9,5 |
| VISCOSITÉ À 100 °C | cSt | ≤ 40 |
| Volume distillé à 250°C | % v.v | < 65 |
| Volume distillé à 350°C | évaporé | < 85 |
| Point d'éclair | °C | ≥ 70 |
| Aspect visuel | -- | foncé à 20°C |
| Teneur en eau | % masse | < 0,5 |
| Teneur en insolubles | % masse | < 0,25 |
| Teneur en soufre | % masse | < 1 |
| Point de trouble | °C | +2 maximum |
| Point d'écoulement | °C | -9 maximum |
| Résidu de carbone (sur le résidu 10% de distillation) | % masse | 0,30 maximum |
| Indice de cétane mesuré | -- | 40 minimum |

### 2. Noir de carbone :

L'installation produit le produit solide dit noir de carbone selon le rapport de 350 kg de noir de carbone par tonne de broyat de pneumatique. Le noir de carbone obtenu dans ces conditions présente les caractéristiques suivantes :

**Tableau 2 - Caractéristiques du noir de carbone**

| **Paramètres** | **Unites** | **Valeurs** |
|---|---|---|
| pH | | < 7,9 |
| Surface spécifique | m^{2/}g | > 60 |
| Masse volumique | kg/m³ | < 375 |
| Cendres | % masse | < 14 |
| Humidité | % masse | < 1 |
| Hydrocarbures | % masse | < 1 |
| Matière organique | % masse | < 5 |
| Souffre | % masse | < 1,5 |
| COV | % masse | < 2 |
| Indice d'iode | mg/g | <150 |
| Métaux lourds | mg/Kg | <1000 |
| Chrome | mg /kg | <60 |
| Mercure | mg/kg | <60 |
| Baryum | mg/kg | <1000 |
| Selenium | mg/kg | <500 |
| Antimoine | mg/kg | <60 |
| Cadmium | mg/kg | <75 |
| Arsenic | mg/kg | <2 |
| Plomb | mg/kg | <90 |

### NORMES ECOLOGIQUES

Les rejets de l'unité selon la présente invention dans l'environnement sont conformes aux normes applicables selon la réglementation française et la réglementation applicable aux installations soumises au régime des Installations Classées Pour l'Environnement (ICPE) notamment l'arrêté préfectoral régissant les rejets autorisés.

### 1. Rejets aqueux

Les seuls rejets aqueux produits par l'installation correspondent à la purge de déconcentration du scrubber pour le traitement des fumées de combustion. Le débit maximum de purge de déconcentration ne dépasse pas 0,5 m³/h ou 12 m³/jour.

| Débit de réferance | Maximal Journalier : 35 m²/J | |
|---|---|---|
| Paramétre | Concentration maximale journalière (mg/l) | Flux maximal Journalier (g/J) |
| MEST | 30 | 900 |
| Carbone Organique Total | 40 | 1200 |
| DCO brute | | 3750 |
| DBO brute | 40 | 1200 |
| Mercure et ses composés, exprimés en mercure | 0,03 | 0,9 |
| Cadmium et ses composés, exprimés en cadmium | 0,05 | 1,5 |
| Thallium et ses composés, exprimés en thallium | 0,05 | 1,5 |
| Arsenic et ses composés, exprimée en arsenic | 0,1 | 3 |
| Plomb et ses composés, exprimés en plomb | 0.2 mg/l | 8 |
| Chrome et ses composés, exprimés en chrome | 0,5 (dont Cr6+ : 0,1) | 15 (dont dont Cr6+ : 3) |
| Cuivre et ses composés, exprimés en cuivre | 0,5 | 15 |
| Nickel et ses composés, exprimés en nickel | 0,5 | 15 |
| Fluorures | 15 | 450 |
| CN libres | 0,1 | 3 |
| Hydrocarbures totaux | 5 | 150 |
| AOX | | |
| Dioxines et furannes | 0.3 ng/l | 9 µg/l |

### 2. Rejets atmosphériques

Les rejets atmosphériques de l'installation sont composés :
- des gaz de combustion après leur traitement par le laveur de gaz,
   - des extractions d'aspiration d'air limitant l'empoussièrement lors du traitement du carbone et qui sont traités par un filtre à manches puis utilisés comme air de combustion.

Ces rejets gazeux respectent les limites de concentration suivantes :

### CONDUIT N°1 : LAVEUR DE GAZ

**a) Poussières totales, HCl, HF, SO₂,NO₄, NH₃,COT**

| **Paramétres** | **Concentration Valeur en moyenne** | | **Flux Valeur en moyenne Journalière g/h** | |
|---|---|---|---|---|
| | **journalière mg/Nm³** | **sur ½ heure mg/Nm³** | **2 lignes en fonctionnement** | **1 ligne en fonctionnement** |
| Poussières totales | 10 | 20 | 150 | 80 |
| chlorure d'hydrogène (HCl) | 10 | 20 | 150 | 80 |
| Fluorure d'hydrogène (HF) | 1 | 2 | 15 | 8 |
| Dioxyde de soufre (SO₂) | 50 | 200 | 750 | 375 |
| Oxydes d'azote (NO₄) | 200 | 400 | 3000 | 1600 |
| . Monoxyde de carbone (CO) | 50 | 100 | 750 | 400 |
| Substances organiques à l'état de gaz ou de vapeurs exprimés en carbone organique total (COT) | 10 | 20 | 150 | 80 |

**b) Métaux**

| **Paramétres (sous toutes leurs formes physiques)** | **Concentration (mg/m³)** | **Flux Valeur en moyenne Journalière (g/h)** | |
|---|---|---|---|
| | | **2 lignes en fonctionnement** | **(ligne en fonctionnement** |
| Cadmium et ses composés, exprimés en cadmium(Cd) + Thallium et ses composés, exprimés en thallium (Tl) | 0,05 | 0,75 | 0,4 |
| Mercure et ses composés, exprimés en mercure (Hg) | 0,05 | 0,75 | 0,4 |
| Total autres métaux et leurs composés (Sb + As + Pb + Cr + Co + Cu + Mn + Ni + V) | 0,5 | 7,5 | 4 |

**c) Dloxines et furannes**

| **Paramètres** | **Concentration** | **Flux Valeur en moyenne Journalière** | |
|---|---|---|---|
| | | **2 lignes en fonctionnement** | **1 ligne en fonctionnement** |
| Dloxines et furannes | 0,1 ng/m² | 1,5 µg/h | 0,8 µg/h |

Les résultats des mesures réalisées pour vérifier le respect des valeurs limites d'émission sont rapportés aux conditions normales de température et de pression, c'est-à-dire 273 K, pour une pression de 101,3 kPa, avec une teneur en oxygène de 11 % sur gaz sec.

Dans les revendications, le terme "comprendre" n'exclut pas d'autres éléments ou d'autres étapes. L'article indéfini « un » n'exclut pas le pluriel. Les différentes caractéristiques présentées et/ou revendiquées peuvent être avantageusement combinées. Leur présence dans la description ou dans des revendications dépendantes différentes, n'exclut pas cette possibilité. Les signes de référence ne sauraient être compris comme limitant la portée de l'invention.

## Revendications

1. Dispositif de traitement de déchets de matières carbonées par vapothermolyse comprenant :
- un réacteur de vapothermolyse (4) destiné à recevoir les déchets broyés, à être alimenté par un combustible provenant d'une cuve (10) et à recevoir des fumées chargées en vapeur d'eau, pour porter les déchets broyés à une température comprise entre 200 et 700 °C au cours d'une réaction de vapothermolyse formant des produits vapeur-gaz, ledit réacteur étant doté :
* de moyens d'introduction (1) des déchets broyés dans ledit réacteur,
* d'une chambre de combustion équipée d'un brûleur (12, 12-b),
* d'une enveloppe (13) recevant les produits de combustion pour chauffer ledit réacteur,
* d'une sortie (8) dudit réacteur destinée à évacuer lesdits produits vapeur-gaz,
- un condenseur (24) pour réaliser la condensation desdits produits vapeur-gaz évacués afin d'obtenir un condensat,
- un séparateur (25) relié audit condenseur pour réaliser la séparation dudit condensat en eau chargée contenant des hydrocarbures résiduels et en huile,
- une cuve de stockage (26) destinée à recevoir ladite eau chargée,
***caractérisé en ce que*** le dispositif comprend en outre des moyens d'acheminement adaptés pour conduire ladite eau chargée de ladite cuve de stockage (26) à ladite chambre de combustion, de sorte que ladite eau chargée traitée par ladite chambre de combustion soit une source d'énergie calorifique dudit réacteur de vapothermolyse (4), ladite source d'énergie calorifique comprenant en outre lesdits produits de combustion provenant de la combustion dudit combustible et/ou de la combustion de gaz non condensés obtenus à l'issue de la condensation desdits produits vapeur-gaz.

2. Dispositif selon la revendication 1, dans lequel ledit réacteur (4) est doté :
* d'un générateur de vapeur (16), et
* d'un surchauffeur de vapeur (17) alimenté en vapeur d'eau par le générateur de vapeur, de manière à porter la vapeur d'eau à l'intérieur du réacteur à une température comprise entre 200 et 700° C.

3. Dispositif selon la revendication 1 ou 2, dans lequel ledit réacteur (4) est en outre doté d'un aspirateur de fumées (14) et d'un scrubber (15), lesdites fumées de combustion étant évacuées au moyen d'un aspirateur de fumées (14) vers ledit scrubber (15),
dans lequel ledit réacteur (4) est doté d'un générateur de vapeur (16) alimentant en vapeur d'eau un surchauffeur de vapeur (17) de manière à porter la vapeur d'eau à l'intérieur dudit réacteur (4) à ladite température comprise entre 200 et 700 °C,
et dans lequel ledit scrubber est relié à des moyens de condensation adaptés pour récupérer de l'eau issue desdites fumées de combustion et la réutiliser pour générer de la vapeur d'eau au niveau dudit réacteur (4).

4. Dispositif selon une des revendications 1 à 3, comprenant en outre un évaporateur (27) recevant l'huile dudit séparateur (25) et adaptée pour permettre l'évaporation de celle-ci en une première fraction avec une température d'ébullition inférieure ou égale à 200 °C, dite fraction légère, et en une deuxième fraction avec une température d'ébullition supérieure à 200 °C, dite fraction lourde.

5. Dispositif selon une des revendications 1 à 4, dans lequel ledit condenseur (24) est équipé d'autres moyens d'acheminement adaptés pour conduire lesdits gaz non condensés obtenus à l'issue de la condensation desdits produits vapeur-gaz vers ledit brûleur (12).

6. Dispositif selon une des revendications 1 à 4, dans lequel ledit condenseur (24) est équipé d'autres moyens d'acheminement adaptés pour conduire lesdits gaz non condensés obtenus à l'issue de la condensation desdits produits vapeur-gaz vers un autre brûleur (12-a) indépendant dudit brûleur (12-b) permettant le traitement thermique de ladite eau chargée.

7. Dispositif selon la revendication 6, dans lequel ledit autre brûleur (12-a) est en outre alimenté par ledit combustible provenant de ladite cuve (10).

## Patentansprüche

1. Vorrichtung zur Behandlung von Kohlenstoffmaterialabfällen durch Dampfthermolyse, umfassend:
- einen Dampfthermolysereaktor (4), der dazu bestimmt ist, die zerkleinerten Abfälle aufzunehmen, einen Brennstoff zugeführt zu bekommen, der aus einem Tank (10) stammt, und wasserdampfhaltigen Rauch aufzunehmen, um die zerkleinerten Abfälle im Laufe einer Dampfthermolysereaktion auf eine Temperatur zwischen 200 und 700 °C zu bringen, wobei Dampf-Gas-Produkte gebildet werden, wobei der Reaktor ausgestattet ist:
• mit Einbringungseinrichtungen (1) für die Einbringung der zerkleinerten Abfälle in den Reaktor,
• mit einer Brennkammer (13) aufweisend einen Brenner (12, 12-b),
• mit einer Hülse (13), die die Verbrennungsprodukte aufnimmt, um den Reaktor zu erwärmen,
• mit einem Ausgang (8) des Reaktors, der dazu bestimmt ist, die Dampf-Gas-Produkte auszuleiten,
- einen Kondensator (24), um die Kondensation der ausgeleiteten Dampf-Gas-Produkte durchzuführen, um ein Kondensat zu erlangen,
- einen mit dem Kondensator verbundenen Abscheider (25), um die Aufspaltung des Kondensats in fremdstoffhaltiges Wasser, das Restkohlenwasserstoffe enthält, und in Öl durchzuführen,
- einen Speichertank (26), der dazu bestimmt ist, das fremdstoffhaltige Wasser aufzunehmen,
**dadurch gekennzeichnet, dass** die Vorrichtung unter anderem Beförderungseinrichtungen umfasst, die dazu ausgelegt sind, das fremdstoffhaltige Wasser aus dem Speichertank zur Brennkammer zu leiten, sodass das durch die Brennkammer behandelte fremdstoffhaltige Wasser eine Wärmeenergiequelle des Dampfthermolysereaktors (4) ist, wobei die Wärmeenergiequelle unter anderem die Verbrennungsprodukte umfasst, die aus der Verbrennung des Brennstoffs und/oder aus der Verbrennung nicht kondensierter Gase, die nach der Kondensation der Dampf-Gas-Produkte erlangt werden, stammen.

2. Vorrichtung nach Anspruch 1, bei der der Reaktor (4) ausgestattet ist
• mit einem Dampfgenerator (16), und
• mit einem Dampfüberhitzer (17), der mit Dampf aus dem Dampferzeuger versorgt wird, um den Dampf im Inneren des Reaktors auf eine Temperatur zwischen 200 und 700 °C zu bringen.

3. Vorrichtung nach Anspruch 1 oder 2, bei der der Reaktor (4) ferner ausgestattet ist mit einem Rauchabzug (14) und einem Wäscher (15),
wobei der Verbrennungsrauch mittels des Rauchabzugs (14) zu dem Wäscher (15) hin ausgeleitet wird,
wobei der Reaktor (4) ausgestattet mit einem Dampfgenerator (16) einem Dampfüberhitzer (17) Wasserdampf zuzuführen, sodass der Wasserdampf im Inneren des Reaktors (4) auf die Temperatur zwischen 200 und 700 °C gebracht wird,
und bei der der Wäscher mit Kondensationseinrichtungen verbunden ist, die dazu ausgelegt sind, aus dem Verbrennungsrauch stammendes Wasser zurückzugewinnen und es wiederzuverwenden, um im Reaktor (4) Wasserdampf zu erzeugen.

4. Vorrichtung nach einem der Ansprüche 1 bis 3, die unter anderem einen Verdampfer (27) umfasst, der das Öl vom Abscheider (25) aufnimmt und dazu ausgelegt ist, die Verdampfung desselben in eine erste Fraktion mit einer Siedetemperatur kleiner oder gleich 200 °C, als leichte Fraktion bezeichnet, und in eine zweite Fraktion mit einer Siedetemperatur höher als 200 °C, als schwere Fraktion bezeichnet, zu ermöglichen.

5. Vorrichtung nach einem der Ansprüche 1 bis 4, bei der der Kondensator (24) mit weiteren Beförderungseinrichtungen ausgestattet ist, die zum Leiten der nicht kondensierten Gase, die nach der Kondensation der Dampf-Gas-Produkte erlangt werden, zum Brenner (12) ausgelegt sind.

6. Vorrichtung nach einem der Ansprüche 1 bis 4, bei der der Kondensator (24) mit weiteren Beförderungseinrichtungen ausgestattet ist, die zum Leiten der nicht kondensierten Gase, die nach der Kondensation der Dampf-Gas-Produkte erlangt werden, zu einem weiteren Brenner (12-a), der unabhängig vom Brenner (12-b) ist, ausgelegt sind, was die thermische Behandlung des fremdstoffhaltigen Wassers ermöglicht.

7. Vorrichtung nach Anspruch 6, bei der dem weiteren Brenner (12-a) unter anderem der aus dem Tank (10) stammende Brennstoff zugeführt wird.

## Claims

1. Device for treating carbonaceous-material waste by steam thermolysis, comprising:
- a steam-thermolysis reactor (4) intended to receive the ground waste, to be supplied by a fuel coming from a vessel (10) and to receive fumes containing steam, in order to raise the ground waste to a temperature of between 200° and 700 °C during a steam-thermolysis reaction forming steam/gas products, said reactor being provided with:
* means (1) for introducing the ground waste into said reactor,
* a combustion chamber provided with a burner (12, 12-b)
* a casing (13) receiving the combustion products in order to heat said reactor,
* an outlet (8) of said reactor intended to discharge said steam/gas products,
- a condenser (24) for condensing said steam/gas products discharged in order to obtain a condensate,
- a separator (25) connected to said condenser in order to separate said condensate into loaded water containing residual hydrocarbons and into oil,
- a storage vessel (26) intended to receive said loaded water,
***characterised in that*** the device further comprises a conveying means suitable for conducting said loaded water from said storage vessel (26) to said combustion chamber, so that said loaded water treated by said combustion chamber is a heat-energy source of said steam-thermolysis reactor (4), said heat-energy source further comprising said combustion products coming from the combustion of said fuel and/or from the combustion of noncondensed gases obtained at the end of the condensation of said steam/gas products.

2. Device according to claim 1, in which said reactor (4) is provided with:
* a steam generator (16), and
* a steam superheater (17) supplied with steam by the steam generator, so as to raise the steam in the reactor to a temperature of between 200° and 700°C.

3. Device according to claim 1 or 2, in which said reactor (4) is furthermore provided with a fume aspirator (14) and a scrubber (15), said combustion fumes being discharged by means of a fume aspirator (14) toward said scrubber (15),
in which said reactor (4) is provided with a steam generator (16) supplying a steam superheater (17) with steam so as to raise the steam in said reactor (4) to said temperature of between 200° and 700 °C,
and in which said scrubber is connected to condensation means suitable for recovering water issuing from said combustion fumes and to re-use it for generating steam at said reactor (4).

4. Device according to any of claims 1 to 3, further comprising an evaporator (27) receiving the oil from said separator (25) and suitable for the evaporation thereof into a first fraction with a boiling point of less than or equal to 200°C, referred to as the light fraction, and into a second fraction with a boiling point above 200°C, referred to as the heavy fraction.

5. Device according to any of claims 1 to 4, in which said condenser (24) is equipped with other conveying means suitable for conducting said non-condensed gases obtained at the end of the condensation of said steam/gas products to said burner (12).

6. Device according to any of claims 1 to 4, in which said condenser (24) is equipped with other conveying means suitable for conducting said non-condensed gases obtained at the end of the condensation of said steam/gas products to another burner (12-a) independent of said burner (12-b) allowing heat treatment of said loaded water.

7. Device according to claim 6, in which said other burner (12-a) is furthermore supplied by said fuel coming from said vessel (10).
